# EUROPEAN PATENT SPECIFICATION

(11) **EP 1 086 190 B1**
(45) Date of publication and mention of the grant of the patent: **27.07.2005**
(21) Application number: 99952096.8
(22) Date of filing: 19.05.1999
(51) Int. Cl.: C09J 163/00, C08L 63/00, B32B 27/00

(54) **ADHESIVE AND COATING FORMULATIONS FOR FLEXIBLE PACKAGING**
KLEBSTOFF UND BESCHICHTUNGSMASE FÜR FLEXIBLE VERPACKUNG
FORMULATIONS D'ADHESIF ET DE REVETEMENT POUR CONDITIONNEMENT FLEXIBLE

(30) Priority: 20.05.1998 US 86079 P; 04.05.1999 US 304892
(43) Date of publication of application: 28.03.2001
(73) Proprietor: Henkel Kommanditgesellschaft auf Aktien, 40589 Düsseldorf (DE)
(72) Inventor: RAMALINGAM, Balasubramaniam, Cary, NC 27511 (US)
(74) Representative: Gillam, Francis Cyril
(86) International application number: PCT/IB1999/001198
(87) International publication number: WO 1999/060068

(56) References cited:
- GB-A- 1 028 864
- GB-A- 1 406 447
- GB-A- 2 102 336
- US-A- 3 256 135
- US-A- 5 516 824
- DATABASE WPI Section Ch, Week 199829 Derwent Publications Ltd., London, GB; Class A21, AN 1998-328557 XP002118606 & JP 10 120808 A (CHUGOKU TORYO KK), 12 May 1998 (1998-05-12)

## Description

### BACKGROUND OF THE INVENTION

Film-to-film and film-to-foil laminates are used in the packaging of various food products and other industrial products. Adhesives and coatings are used in making these composite structures, since it is often difficult to achieve satisfactory bonding of films of differing composition using co-extrusion or heat-welding techniques. Laminates of this type are required to have a number of key performance features such that the packaged goods can be safely placed, transported and stored until they are used by the customer. During the many stages of packaging, the laminates are subjected to various processes like printing, pouching, bag making, filling, boxing, transporting etc. For more than 20 years, formulations based on polyurethanes produced principally by the reaction of polyols and polyisocyanates were used. These products were mainly solvent solutions of polyester and or polyether polyols reacted suitably with aromatic isocyanates like MDI (diphenylmethane diisocyanate), TDI (toluene diisocyanate) and the many reaction products of diisocyanates. Due to increased environmental awareness, such solvent solutions were replaced with solvent-free polyurethanes in most applications. While a few water-based laminating adhesives are known, most are provided as 100% solids systems. These systems were essentially similar to solvent-carried products but they contained significant amounts of free monomeric isocyanates. Their volatility, the health effects of such isocyanates and their reaction products with atmospheric moisture resulting in the formation of aromatic diamines have been cause for concern, especially in food packaging. Almost all adhesives and most of the coatings used in the industry are based on polyurethanes. When films that are considered high barrier, meaning they do not allow the passage of gases freely through them, are to be laminated, such free isocyanate-containing adhesives cause an appearance problem. Trace amounts of moisture present in the film surfaces react with isocyanates in a well known reaction producing carbamic acid. This unstable acid releases carbon dioxide gas. Due to the impervious nature of the films, the carbon dioxide is trapped as bubbles causing an appearance problem.

Laminating adhesive compositions comprised of conjugated diene block copolymers with epoxy end groups and tackifying resins which are cured with BF₃ curatives are known. However, the adhesion values obtainable for a variety of substrates using such adhesive compositions is very limited, ranging from 25 grams/inch (25 g/0.254 m) to 270 grams/inch (270 g/0.254 m). The poor adhesion may be due to the presence of the large olefinic mid block. The formulations with slightly higher bond strengths use base polymers having viscosities of 64,000 pascal seconds or more and are impossible to run at temperatures of 25°C to 75°C. Also known are compositions of polyurethanes with epoxy resins for laminating applications. However, the need for radiation curing such compositions results in enormous cost due to the expensive nature of UV curing lamps. Additionally, reaction products of the photo initiators used in such formulations impart an undesirable odor to the finished lamination. Also known is a composition involving a polyester blended with an epoxy resin but cured with polyisocyanates. The potential for unreacted monomeric isocyanates and their reaction products is still a concern in such applications.

### SUMMARY OF THE INVENTION

The present invention provides the use of a formulation for laminating adhesive or laminating coating applications which is essentially free of solvent, water, and isocyanate-functionalized compounds. The formulation as specified by Claim 1 is comprised of a product obtained by mixing and reacting an epoxy resin and a curative having at least one active hydrogen contained in a functional group selected from primary amino groups, secondary amino groups, carboxyl groups, and combinations thereof. The epoxy resin(s) and curative(s) are selected so as to provide a product which exhibits a viscosity in the range of about 1,000 to about 10,000 (mPas) cps at 40°C for at least 20 minutes after mixing of the epoxy resin(s) and curative(s). The product provides a flexible adhesive or coating when fully reacted; the laminates thereby obtained as specified by Claim 4 exhibit high peel strength values, as measured by ASTM D1876, after both 16 hours and 7 days (typically, at least 200 grams/inch (200 g/0.0254 m), and, in some embodiments, at least 400 grams/inch (400 g/0.0254 m).

### DETAILED DESCRIPTION OF THE INVENTION

Providing a non-isocyanate based adhesive system which can be easily used with existing machinery for a wide range of substrates is a key objective of the current invention. Epoxy resins are used as structural adhesives and provide a thermosetting bond between rigid substrates. U.S. 4,751,129, U.S. 3,894,113, U.S. 4,320,047, U.S. 4,444,818, all of which are incorporated in their entirety as if set forth in full herein, are only a few of the vast number of patents in the literature. Several patents have suggested or proposed that epoxy resins might be useable as components of an adhesive to bond together certain types of films. See, for example, U.S. Patent Numbers 4,211,811, 4,311,742, 4,329,395, 4,360,551, and 4,389,438 and British Patent Number 1,406,447. These patents do not, however, provide any useful guidance in selecting particular combinations of epoxy resins and curing systems in order to obtain a laminating adhesive or coating having satisfactory viscosity and adhesive characteristics.

Reaction products of di/poly glycidyl ether-containing compounds and di/poly amines and/or di/poly acids are well known in many structural adhesive applications. The current invention pertains to compositions that are suitable for combining various printed and unprinted films with other films and foil substrates. Such formulations also possess unexpectedly desirable properties in the laminating and packaging process. Solvent-free polyurethane adhesives are applied by specially designed machines for controlling the variable tensions of the two laminated substrates. In order to produce a useful lamination, the viscosity of the adhesive formulation should be in the range of from about 1,000 cps to about 10,000 (mPas) cps at application temperature such that the adhesive can flow evenly and wet the substrate to which it is applied. Yet once the second film is brought in contact with the adhesive layer, sufficient adhesion should be developed. These specially designed machines hold the freshly laminated rolls under mechanical tension such that the differential tension experienced by the two dissimilar films will not destroy the developing adhesive bond between the two films. Potential users of these laminates have to wait until such time when the adhesive strength is sufficient to withstand this dissimilar force. The longer the delay in further processing the rolls, the greater the manufacturing expense. Formulations of the present invention develop sufficient strength in a relatively short time period as compared to the known polyurethane-based products.

With the introduction of fresh produce like salads, vegetables and fruits in easy to use packages, the role adhesives play in acting as barriers to oxygen, moisture and carbon dioxide has become significant. While certain products need "breathability", meaning free flow of oxygen, others can become easily spoiled in an atmosphere of oxygen. The ability to dial-in the required oxygen transmission rate (OTR) is becoming increasingly critical. While most polyurethane-based adhesives offer some resistance to oxygen transmission, they are not good for what are called high barrier applications. Surprisingly, the current invention provides products that, in addition to meeting most other flexible packaging requirements, can easily furnish from no barrier to very high barrier adhesive layers by choosing different commercially available starting materials.

The curative(s) used are as specified in Claim 1 (b). The curative or mixture of curatives is selected so as to provide the desired viscosity after mixing with the epoxy resin and the desired physical, adhesive and mechanical properties in the cured adhesive or coating formulation layer of the laminate. Solid curatives are preferably used in combination with liquid epoxy resins in order to obtain a blend having a workable viscosity at 40°C. Particularly preferred classes of curatives include alkanolamines (e.g. 2-(2-aminoethylamino)) ethanol, monohydroxyethyl diethylenetriamine, dihydroxyethyl diethylene triamine), amine-terminated polyoxyalkylenes such as the amine-terminated polymers of ethylene oxide and/or propylene oxide sold by Huntsman Chemical under the trademark JEFFAMINE, polyamidoamines (also sometimes referred to as polyaminoamides; e.g., the condensation products based on polyamines such as diethylene triamine and carboxylic acids or carboxylic acid derivatives), the reaction products obtained from alkanolamines and glycidyl esters of carboxylic acids such as neodecanoic acids, carboxyl-terminated polyester resins (obtained, for example, by the condensation polymerization of polyols such as glycols and polycarboxylic acids or derivatives thereof, with aliphatic polycarboxylic acids being preferred over aromatic polycarboxylic acids), the reaction products obtained from alkanolamines and carboxyl-terminated polyester resins, the reaction products obtained from aliphatic polyamines and monofunctional epoxy compounds, and mixtures thereof.

The precise ratio of epoxy resin(s) to curative(s) in the laminating adhesive or coating formulation is not believed to be particularly critical. Typically, however, it will be desirable to maintain the ratio of epoxy equivalents:active hydrogen equivalents in the range of about 1:0.2 to about 1:4 (preferably, about 1:0.5 to about 1:2).

For particular end-use applications, it may be desirable to incorporate one or more flow modifiers, wetting agents and other conventional processing aids. Typically, such additional components are added at levels of from about 0.1 to about 1 percent, based on the total weight of the laminating adhesive or coating formulations.

Particularly advantageous combinations of epoxy resins and curatives are as follows:
a) a liquid diglycidyl ether of bisphenol A having an epoxide equivalent weight of about 170 to about 300 in combination with a polyamidoamine or polyamide curative;
b) a liquid diglycidyl ether of bisphenol A having an epoxide equivalent weight of about 170 to about 300 in combination with the reaction product of an alkanolamine and a glycidyl ester of a carboxylic acid;
c) a liquid diglycidyl ether of bisphenol A having an epoxide equivalent weight of about 170 to about 300 in combination with an amine-terminated polyoxyalkylene;
d) a liquid diglycidyl ether of bisphenol A having an epoxide equivalent weight of about 170 to about 300 in combination with the reaction product of a carboxyl-terminated aliphatic polyester resin having a molecular weight of from about 200 to about 3,000 and an alkanolamine;
e) a glycidyl ether of an aliphatic polyol (said polyol preferably containing 2 to 8 hydroxyl groups) having an epoxide equivalent weight of about 100 to about 300 in combination with the reaction product of an alkanolamine and a glycidyl ester of a carboxylic acid;
f) a liquid diglycidyl ether of bisphenol A having an epoxide equivalent weight of about 170 to about 300 in combination with a carboxyl-terminated aliphatic polyester resin having a molecular weight of from about 300 to about 3,000;
g) a liquid diglycidyl ether of resorcinol or bisphenol F having an epoxide equivalent weight of about 100 to about 300 in combination with the reaction product of an aliphatic polyamine and a monofunctional epoxy resin.

The film or films to be coated or adhered to each other using the formulations of the present invention may be comprised of any of the materials known in the art to be suitable for use in flexible packaging, including both polymeric and metallic materials. Thermoplastics are particularly preferred for use as at least one of the layers. The materials chosen for individual layers in a laminate are selected to achieve specific combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, machinability and relative cost. Individual layers may be pure polymers or blends of different polymers. The polymeric layers are often formulated with colorants, anti-slip, anti-block, and anti-static processing aids, plasticizers, lubricants, fillers, stabilizers and the like to enhance certain layer characteristics.

Particularly preferred polymers for use in the present invention include, but are not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMDPE)), polypropylene (PP), oriented polypropylene, polyesters such as poly(ethylene terephthalate) (PET) and poly(butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadiene-styrene polymers (ABS), and acrylonitrile copolymers (AN).

The polymer surface may be treated or coated, if so desired. For example, a film of polymer may be metallized by depositing a thin metal vapor such as aluminum onto the film's surface. Metallization may enhance the barrier properties of the finished laminate. The polymer film surface may also be coated with an anti-fog additive or the like or subjected to a pretreatment with electrical or corona discharges, or ozone or other chemical agents to increase their adhesive receptivity.

One or more layers of the laminate may also comprise a metal foil, such as aluminum foil, or the like. The metal foil will preferably have a thickness of about 5 to 100 µm.

The individual films comprising the laminates of the present invention can be prepared in widely varying thicknesses, for example, from about 0.1 mils (2.54 µm) to about (254 µm) 10 mils and preferably from about 0.5 mils (12.7 µm) to about 5 (127 µm) mils. The films, foils, and laminating adhesive or coating formulation can be assembled into the laminate by using any one or more of the several conventional procedures known in the art for such purpose. For instance, the adhesive or coating formulation may be applied to the surface of one or both of two films/foils by means of extrusion, brushes, rollers, blades, spraying or the like and the film/foil surface(s) bearing the adhesive or coating formulation brought together and passed through a set of rollers which press together the superimposed films/foils having the adhesive or coating formulation between the films/foils. Typically, the rate at which the adhesive or coating formulation is applied to the surface of a film or foil is in the range of about 0.2 to about 5 g/m². It will often be desirable to heat the laminate at an elevated temperature so as to accelerate full curing of the adhesive or coating formulations. Typically, temperatures of from about 50°C to about 100°C will be sufficient, although care usually should be taken not to exceed the melting point of any of the polymeric components of the laminate.

Laminates of the present invention as specified by Claim 4 may be used for packaging purposes in the same manner as conventional or known flexible laminated packaging films. The laminates are particularly suitable for forming into flexible pouch-shaped container vessels capable of being filled with a foodstuff and retorted. For example, two rectangular or square sheets of the laminate may be piled in the desired configuration or arrangement; preferably, the two layers of the two sheets which face each other are capable of being heat-sealed to each other. Three peripheral portions of the piled assembly are then heat-sealed to form the pouch. Heat-sealing can easily be accomplished by means of a heating bar, heating knife, heating wire, impulse sealer, ultrasonic sealer, or induction heating sealer.

The foodstuff is thereafter packed in the so-formed pouch. If necessary, gasses injurious to the foodstuff such as air are removed by known means such as vacuum degasification, hot packing, boiling degasification, steam jetting or vessel deformation. The pouch opening is then sealed using heat. The packed pouch may be charged to a retorting apparatus and sterilized by heating to a temperature greater than about 100°C.

### Example 1:

Four parts by weight of EPON 828 resin (a diglycidyl ether of bisphenol A having an epoxide equivalent weight of 175-210) obtained from Shell Chemical and 1 part by weight of HY 955 polyamidoamine obtained from Ciba Geigy were blended in a planetary mixer until a homogeneous light yellowish liquid resulted. The initial viscosity of the blend was determined at 40°C in a Brookfield viscometer to be 1,850 mPas. The viscosity gradually increased after 20 minutes to 5,000 mPas. The viscosity range of 1,000 to 10,000 (mPas) during the 20 to 30 minute interval after mixing at 40°C is considered to be most suitable for trouble-free lamination in the specialized solventless laminating machines currently in commercial use.

### Example 2:

Thirty percent by weight of 2-(2-aminoethylamino)ethanol and 70% by weight of Exxon's GLYDEXX N-10 (a glycidyl ester of neodecanoic acid) were mixed together for 30 minutes at a temperature of 50°C. The resulting blend was used as the active hydrogen-containing component. One and one-half parts by weight of EPON 828 resin was blended with 1 part by weight of the EPON 828/GLYDEXX N-10 reaction product. The viscosity of this blend also remained in the desirable range of 2,200 to 8,000 mPas for at least 30 minutes after preparation.

### Example 3:

Six parts by weight of EPON 828 resin were blended with 1 part by weight of JEFFAMINE D 2000, a polypropylene glycol diamine sold by Huntsman Chemical, to give a homogeneous mix. The viscosity obtained for this blend was also in the desirable range for the 20 to 30 minutes after mixing.

### Example 4:

A carboxyl-terminated polyester resin obtained from the reaction of neopentyl glycol and adipic acid with a molecular weight of 540 was reacted with 2-(2-aminoethylamino)ethanol. The resulting product was blended with EPON 828 epoxy resin in a weight ratio of 1 to 5 to give a product having a viscosity remaining in the desired range for at least 30 minutes after mixing.

### Example 5: (Not part of Invention)

Example 2 was repeated using a sorbitol-based polyepoxy resin with an epoxy equivalent weight of 180 in place of EPON 828.

### Example 6:

Adhesive compositions from Examples 1 through 5 were used to produce the following laminates on a NORDMECHANICA solventless laminator.
A) Polyethylene terephthalate film (Dupont Mylar, 48 Gauge) to Polyethylene film (Dupont SL1);
B) Aluminum Foil to Polyethylene film (Dupont SL3);
C) Metallized Polypropylene film to Polyvinylidenechloride (PVdC) Coated Oriented Polypropylene (OPP) film (70 PSX, Mobil).

### Example 7:

The laminates obtained from Example 6 were tested for peel strength and heat seal strength using an Instron. The test method used (ASTM D1876) measured the peel strengths and heat seal strengths of the laminates. The table below shows the adhesion values obtained with Example 1 and Example 2.

| Peel Strength and Heat Seal Strengths (grams/inch) | | | |
|---|---|---|---|
| Adhesive used: | Example 2: | | |
| | 16 Hour Peel Strength | 7 Day Peel Strength | 7 Day Heat Seal Strength |
| A).Mylar / SL 1 | 450 (ST) | 450 (ST) | 8730 (ST) |
| B).Al Foil / SL3 | 650 | 600 | 3420 |
| C).PET/PVdC/MOPP | 350 (ST) | 400 (ST) | N.A. |

| Adhesive used: | | | |
|---|---|---|---|
| | Example 1: | | |
| A).Mylar / SL1 | 450 (ST) | 400 (ST) | 5300 (ST) |
| B).Al Foil / SL3 | 500 | 580 | 5420 (ST) |
| C).PET/PVdC/MOPP | 250 (ST) | 300 (ST) | N.A. |
| Coating weight: 1.6 grams / sq. meter | | | |
| ST : Destruction of one or both substrates. | | | |
| Heat Seal Conditions: 350°F (177°C), 2 seconds, dwell at 40 psi. (2·75 x 10⁵Pa) | | | |

### Example 8:

The Mylar / SL1 laminates from Example 7 were used to make 4 inch X 4 inch (0·10 m x 0·10 m) pouches. The pouches were filled with various food products and stored in an oven at 60°C for 100 hours. The pouches were examined at the end for integrity.

| Food Ingredients | Example 1 | Example 2 |
|---|---|---|
| Ketchup | Pass | Pass |
| Mustard | Pass | Pass |
| Thousand Island Salad Dressing | Pass | Pass |
| Isopropanol | Pass | Pass |
| Hazelnut Oil | Pass | Pass |

### Example 9:

Special laminates were made with 40 gauge oriented polypropylene and 1.5 mil (38·1 µm) polyethylene films containing an anti-fog coating. Laminates of these types of films are typically used in the packaging of fresh vegetables and fruits. Adhesion values and oxygen transmission rates were determined on the laminates obtained.

| Peel Strength | | | | |
|---|---|---|---|---|
| Adhesive | 24 Hours | 7 days | 7 Day Heat Seal | OTRs |
| Example 2 | 855 (ST) | 800 (ST) | 2450 | 150* |
| Example 1 | 750 (ST) | 800 (ST) | 4000 (ST) | 55* |

| | | | | |
|---|---|---|---|---|
| * - cc / 100 sq. inch/day (0·645 m²/day): measured on a Mocon Oxytran system | | | | |

### Example 10:

A polyester resin of molecular weight 1,000 with carboxyl end groups was made by reacting adipic acid and diethylene glycol. The resulting polyester had a viscosity of 2,500 mPas at room temperature. EPON 828 epoxy resin was blended with the polyester in a 1 to 1 weight ratio in a laboratory mixer. Choline chloride (0.1 wt%) was added and mixed thoroughly. The resulting blend exhibited a viscosity in the desirable range of 3,500 to 8,000 mPas for at least 30 minutes at 40°C after mixing..

### Example 11:

A comparative example of a polyurethane laminating adhesive was made as follows: In a reaction vessel a polyether prepolymer with a 15% NCO content was prepared from PPG 1025 polyether polyol and methylene diisocyanate. The prepolymer was blended with a polyester polyol resin based on diethylene glycol and adipic acid such that the resulting adhesive had a NCO:OH ratio of 1.5 to 1.

### Example 12:

Laminates were made as described in Example 7 using the adhesives described in Examples 10 and 11. All test conditions were similar to Example 7.

| Adhesive used: | Example 10 | | | |
|---|---|---|---|---|
| | 24 Hour Peel Strength | 7 Day Peel Strength | 7 Day Heat Seal Strength | Appearance |
| Mylar / SL1 | 400 | 450 | 4025 | No Bubbles |
| OPP / PVdC PVdC / OPP* | 350 | 475 (ST) | | No Bubbles |
| | | | | |

| Adhesive used: | Example 11 | | | |
|---|---|---|---|---|
| | | | | |
| Mylar / SL1 | 450 (ST) | 450 (ST) | 4500 | No Bubbles |
| OPP/PVdC PVdC/OPP* | 300 | 425 (ST) | | Air Bubbles |

| | | | | |
|---|---|---|---|---|
| * 70 PSX PVdC coated polypropylene film (Mobil) | | | | |

### Example 13

Tetraethylene pentamine (40 pbw) was reacted with 60 pbw ERISYS GE8 (a monofunctional epoxy resin available from CVC Specialty Chemicals Inc.). The resulting adduct was blended with ERISYS RDGE (a resorcinol-based epoxy resin having an epoxy equivalent weight of 127 and a viscosity of 425 mPas available from CVC Specialty Chemicals Inc.) using a weight ratio of 2.7 pbw epoxy resin to 1 pbw adduct.

Two polyethylene films (Dupont SL1, 2 mil (50·8 µm) thickness; Huntsman PE 208.24) were laminated using the aforedescribed blend. Within 24 hours, the resulting laminate exhibited a 2.5 lb (1·14 kg) peel strength, sufficient to destroy the polyethylene films if separation was attempted.

### Example 14

Example 13 was repeated, but using EPOALLOY 8230 (a bisphenol F-based epoxy resin having an epoxide equivalent weight of 170 and a viscosity of 4,100 mPas, available from CVC Specialty Chemicals Inc.) in place of the ERISYS RDGE. The epoxy resin/adduct mix ratio was adjusted to 3.5:1. The resulting laminate provided a stock tearing bond having a 0.9 lb (0·41 kg) peel strength value.

## Claims

1. The use as a laminating adhesive or laminating coating composition, essentially free of solvent, water and isocyanate-functionalised compounds, of a product obtained by mixing and reacting:
(a) at least one epoxy resin selected from diglycidyl ethers of bisphenol A, bisphenol F or resorcinol, glycidyl ethers of aliphatic polyols containing from 2 to 8 hydroxyl groups, and mixtures thereof; and
(b) at least one curative having at least one active hydrogen contained in a functional group selected from primary amino groups, secondary amino groups, carboxyl groups and combinations thereof, said curative being selected from:
(i) alkanolamines;
(ii) reaction products of alkanolamines and glycidyl esters of carboxylic acids;
(iii) amine-terminated polyoxyalkylenes;
(iv) carboxyl-terminated aliphatic polyester resins;
(v) reaction products of aliphatic polyamines and monofunctional epoxy compounds;
(vi) reaction products of alkanolamines, and carboxyl-terminated aliphatic polyester resins; and
(vii) mixtures thereof;
said epoxy resin and said curative being selected so as to maintain the viscosity of said product within the range of from 1,000 to 10,000 mPaS (cps) at 40°C for at least 20 minutes after mixing, and to provide a flexible adhesive or coating when fully reacted.

2. The use as claimed in claim 1, wherein the epoxy resin(s) and the curative(s) are both present in amounts such that the ratio of epoxy equivalent relative to active hydrogen equivalent is in the range of from 5:1 to 1:4.

3. The use as claimed in claim 1 or claim 2, wherein the epoxy resin(s) and the curative(s) are both present in amounts such that the ratio of epoxy equivalent relative to active hydrogen equivalent is in the range of from 2:1 to 1:2.

4. A laminate comprising at least one polymeric film and a laminating adhesive or coating formulation which is essentially free of solvent, water and isocyanate-functionalised compounds, and which comprises a product obtained by mixing and reacting:
(a) at least one epoxy resin selected from diglycidyl ethers of bisphenol A, bisphenol F or resorcinol, glycidyl ethers of aliphatic polyols containing from 2 to 8 hydroxyl groups, and mixtures thereof; and
(b) at least one curative having at least one active hydrogen contained in a functional group selected from primary amino groups, secondary amino groups, carboxyl groups and combinations thereof, said curative being selected from:
(i) alkanolamines;
(ii) reaction products of alkanolamines and glycidyl esters of carboxylic acids;
(iii) amine-terminated polyoxyalkylenes;
(iv) carboxyl-terminated aliphatic polyester resins;
(v) reaction products of aliphatic polyamines and monofunctional epoxy compounds;
(vi) reaction products of alkanolamines, and carboxyl-terminated aliphatic polyester resins; and
(vii) mixtures thereof;
said epoxy resin and said curative being selected so as to maintain the viscosity of said product within the range of from 1,000 to 10,000 mPaS (cps) at 40°C for at least 20 minutes after mixing, and to provide a flexible adhesive or coating when fully reacted; in cured form.

5. A laminate as claimed in claim 4, comprising at least two polymeric films, wherein the laminating adhesive formulation is located between two of said polymeric films and adheres said polymeric films to each other.

6. A laminate as claimed in claim 4 or claim 5, wherein at least one polymeric film comprises a thermoplastic selected from polyethylene terephthalate, polyethylene, polypropylene and polyvinylidene chloride.

7. A laminate as claimed in any of claims 4 to 6, which additionally comprises a metal foil and wherein the laminating adhesive formulation is located between said metal foil and at least one polymeric film.

8. A laminate as claimed in any of claims 4 to 7, wherein at least one polymeric film is metalised.

9. A flexible film laminate comprising:
(a) a first layer comprised of a first polyolefin or first polyester;
(b) a second layer comprised of a second polyolefin, which may be the same or different from the first polyolefin, a second polyester, which may be the same or different from the first polyester, or a metal foil;
(c) an adhesive layer bonding the first layer to the second layer, said adhesive layer being essentially free of solvent, water and isocyanate-functionalised compounds and which comprises a product obtained by mixing and reacting:
(A) at least one epoxy resin selected from diglycidyl ethers of bisphenol A, bisphenol F or resorcinol, glycidyl ethers of aliphatic polyols containing from 2 to 8 hydroxyl groups, and mixtures thereof; and
(B) at least one curative having at least one active hydrogen contained in a functional group selected from primary amino groups, secondary amino groups, carboxyl groups and combinations thereof, said curative being selected from:
(i) alkanolamines
(ii) reaction products of alkanolamines and glycidyl esters of carboxylic acids;
(iii) amine-terminated polyoxyalkylenes;
(iv) aromatic diamines;
(v) aromatic polyamines;
(vi) carboxyl-terminated aliphatic polyester resins;
(vii) polyamidoamines;
(viii) polyamides;
(ix) reaction products of aliphatic polyamines and monofunctional epoxy compounds;
(x) reaction products of alkanolamines, and carboxyl-terminated aliphatic polyester resins; and
(xi) mixtures thereof;
said epoxy resin and said curative being selected so as to maintain the viscosity of said product within the range of from 1,000 to 10,000 mPaS (cps) at 40°C for at least 20 minutes after mixing and to provide a flexible adhesive or coating when fully reacted.

10. A flexible film laminate as claimed in claim 9, wherein in the adhesive layer (c) the epoxy resin (A) and the curative (B) are present in amounts such that the ratio of epoxy equivalent relative to active hydrogen equivalent is in the range of from 5:1 to 1:4.

11. A flexible film laminate as claimed in claim 9 or claim 10, wherein in the adhesive layer (c), the epoxy rein (A) and the curative (B) are present in amounts such that the ratio of epoxy equivalent relative to active hydrogen equivalent is in the range of from 2:1 to 1:2.

12. A flexible film laminate as claimed in any of claims 9 to 11, wherein the first layer and the second layer each have a thickness in the range of from 10 to 100 microns.

13. A retortable food pouch fabricated from a flexible film laminate as claimed in any of claims 9 to 12.

## Patentansprüche

1. Verwendung eines Produkts, das durch Mischen und Umsetzen der folgenden Stoffe erhalten wird, als Laminierkleber oder Laminierbeschichtungszusammensetzung, der bzw. die im Wesentlichen frei von Lösungsmittel, Wasser und isocyanatfunktionalisierten Verbindungen ist:
(a) wenigstens ein Epoxyharz, das aus Diglycidylethern von Bisphenol A, Bisphenol F oder Resorcin, Glycidylethern von aliphatischen Polyolen, die 2 bis 8 Hydroxygruppen enthalten, und Gemischen davon ausgewählt ist; und
(b) wenigstens ein Härtungsmittel, das wenigstens ein aktives Wasserstoffatom aufweist, welches in einer funktionellen Gruppe enthalten ist, die aus primären Aminogruppen, sekundären Aminogruppen, Carboxygruppen und Kombinationen davon ausgewählt ist, wobei das Härtungsmittel ausgewählt ist aus:
(i) Alkanolaminen;
(ii) Reaktionsprodukten von Alkanolaminen und Glycidylestern von Carbonsäuren;
(iii) aminterminierten Polyoxyalkylenen;
(iv) carboxyterminierten aliphatischen Polyesterharzen;
(v) Reaktionsprodukten von aliphatischen Polyaminen und monofunktionellen Epoxyverbindungen;
(vi) Reaktionsprodukten von Alkanolaminen und carboxyterminierten aliphatischen Polyesterharzen; und
(vii) Gemischen davon;
wobei das Epoxyharz und das Härtungsmittel so ausgewählt sind, dass die Viskosität des Produkts nach dem Mischen wenigstens 20 Minuten lang im Bereich von 1000 bis 10 000 mPa·s (cP) bei 40 °C gehalten wird und man bei vollständiger Umsetzung einen flexiblen Kleber oder eine flexible Beschichtung erhält.

2. Verwendung gemäß Anspruch 1, wobei das bzw. die Epoxyharze und das bzw. die Härtungsmittel beide in solchen Mengen vorhanden sind, dass das Verhältnis von Epoxyäquivalent zu Äquivalent an aktivem Wasserstoff im Bereich von 5:1 bis 1:4 liegt.

3. Verwendung gemäß Anspruch 1 oder 2, wobei das bzw. die Epoxyharze und das bzw. die Härtungsmittel beide in solchen Mengen vorhanden sind, dass das Verhältnis von Epoxyäquivalent zu Äquivalent an aktivem Wasserstoff im Bereich von 2:1 bis 1:2 liegt.

4. Laminat mit wenigstens einem polymeren Film und einem Laminierkleber oder einer Laminierbeschichtungszusammensetzung, der bzw. die im Wesentlichen frei von Lösungsmittel, Wasser und isocyanatfunktionalisierten Verbindungen ist und ein Produkt, das durch Mischen und Umsetzen der folgenden Stoffe erhalten wird, in gehärteter Form umfasst:
(a) wenigstens ein Epoxyharz, das aus Diglycidylethern von Bisphenol A, Bisphenol F oder Resorcin, Glycidylethern von aliphatischen Polyolen, die 2 bis 8 Hydroxygruppen enthalten, und Gemischen davon ausgewählt ist; und
(b) wenigstens ein Härtungsmittel, das wenigstens ein aktives Wasserstoffatom aufweist, welches in einer funktionellen Gruppe enthalten ist, die aus primären Aminogruppen, sekundären Aminogruppen, Carboxygruppen und Kombinationen davon ausgewählt ist, wobei das Härtungsmittel ausgewählt ist aus:
(i) Alkanolaminen;
(ii) Reaktionsprodukten von Alkanolaminen und Glycidylestern von Carbonsäuren;
(iii) aminterminierten Polyoxyalkylenen;
(iv) carboxyterminierten aliphatischen Polyesterharzen;
(v) Reaktionsprodukten von aliphatischen Polyaminen und monofunktionellen Epoxyverbindungen;
(vi) Reaktionsprodukten von Alkanolaminen und carboxyterminierten aliphatischen Polyesterharzen; und
(vii) Gemischen davon;
wobei das Epoxyharz und das Härtungsmittel so ausgewählt sind, dass die Viskosität des Produkts nach dem Mischen wenigstens 20 Minuten lang im Bereich von 1000 bis 10 000 mPa·s (cP) bei 40 °C gehalten wird und man bei vollständiger Umsetzung einen flexiblen Kleber oder eine flexible Beschichtung erhält.

5. Laminat gemäß Anspruch 4, das wenigstens zwei polymere Filme umfasst wobei sich die Laminierkleberzubereitung zwischen zweien der polymeren Filme befindet und die polymeren Filme miteinander verklebt.

6. Laminat gemäß Anspruch 4 oder 5, wobei wenigstens ein polymerer Film einen Thermoplast umfasst, der aus Polyethylenterephthalat, Polyethylen, Polypropylen und Polyvinylidenchlorid ausgewählt ist.

7. Laminat gemäß einem der Ansprüche 4 bis 6, das zusätzlich eine Metallfolie umfasst, wobei sich die Laminierkleberzubereitung zwischen der Metallfolie und wenigstens einem polymeren Film befindet.

8. Laminat gemäß einem der Ansprüche 4 bis 7, wobei wenigstens eine polymere Folie metallisiert ist.

9. Flexibles Filmlaminat, umfassend:
(a) eine erste Schicht, die aus einem ersten Polyolefin oder einem ersten Polyester besteht;
(b) eine zweite Schicht, die aus einem zweiten Polyolefin, welches dasselbe wie das erste Polyolefin oder von diesem verschieden sein kann, einem zweiten Polyester, der derselbe wie der erste Polyester oder von diesem verschieden sein kann, oder einer Metallfolie besteht;
(c) eine Kleberschicht, die die erste Schicht mit der zweiten Schicht verklebt, wobei die Kleberschicht im Wesentlichen frei von Lösungsmittel, Wasser und isocyanatfunktionalisierten Verbindungen ist und ein Produkt umfasst, das durch Mischen und Umsetzen der folgenden Stoffe erhalten wird:
(A) wenigstens ein Epoxyharz, das aus Diglycidylethern von Bisphenol A, Bisphenol F oder Resorcin, Glycidylethern von aliphatischen Polyolen, die 2 bis 8 Hydroxygruppen enthalten, und Gemischen davon ausgewählt ist; und
(B) wenigstens ein Härtungsmittel, das wenigstens ein aktives Wasserstoffatom aufweist, welches in einer funktionellen Gruppe enthalten ist, die aus primären Aminogruppen, sekundären Aminogruppen, Carboxygruppen und Kombinationen davon ausgewählt ist, wobei das Härtungsmittel ausgewählt ist aus:
(i) Alkanolaminen;
(ii) Reaktionsprodukten von Alkanolaminen und Glycidylestern von Carbonsäuren;
(iii) aminterminierten Polyoxyalkylenen;
(iv) aromatischen Diaminen;
(v) aromatischen Polyaminen;
(vi) carboxyterminierten aliphatischen Polyesterharzen;
(vii) Polyamidoaminen;
(viii) Polyamiden;
(ix) Reaktionsprodukten von aliphatischen Polyaminen und monofunktionellen Epoxyverbindungen;
(x) Reaktionsprodukten von Alkanolaminen und carboxyterminierten aliphatischen Polyesterharzen; und
(xi) Gemischen davon;
wobei das Epoxyharz und das Härtungsmittel so ausgewählt sind, dass die Viskosität des Produkts nach dem Mischen wenigstens 20 Minuten lang im Bereich von 1000 bis 10 000 mPa·s (cP) bei 40 °C gehalten wird und man bei vollständiger Umsetzung einen flexiblen Kleber oder eine flexible Beschichtung erhält.

10. Flexibles Filmlaminat gemäß Anspruch 9, wobei das Epoxyharz (A) und das Härtungsmittel (B) in der Kleberschicht (c) in solchen Mengen vorhanden sind, dass das Verhältnis von Epoxyäquivalent zu Äquivalent an aktivem Wasserstoff im Bereich von 5:1 bis 1:4 liegt.

11. Flexibles Filmlaminat gemäß Anspruch 9 oder 10, wobei das Epoxyharz (A) und das Härtungsmittel (B) in der Kleberschicht (c) in solchen Mengen vorhanden sind, dass das Verhältnis von Epoxyäquivalent zu Äquivalent an aktivem Wasserstoff im Bereich von 2:1 bis 1:2 liegt.

12. Flexibles Filmlaminat gemäß einem der Ansprüche 9 bis 11, wobei die erste Schicht und die zweite Schicht jeweils eine Dicke im Bereich von 10 bis 100 µm haben.

13. Im Autoklaven sterilisierbarer Lebensmittelbeutel, der aus einem flexiblen Filmlaminat gemäß einem der Ansprüche 9 bis 12 hergestellt wird.

## Revendications

1. Utilisation comme adhésif de laminage ou composition de revêtement de laminage, essentiellement exempt(e) de solvant, d'eau et de composés isocyanate-fonctionnalisés, d'un produit obtenu en mélangeant et en faisant réagir :
(a) au moins une résine époxy choisie parmi les éthers diglycidyliques du bisphénol A, du bisphénol F ou du résorcinol, les éthers glycidyliques des polyols aliphatiques contenant de 2 à 8 groupes hydroxyle, et les mélanges de ceux-ci ; et
(b) au moins un agent de traitement ayant au moins un hydrogène actif contenu dans un groupe fonctionnel choisi parmi les groupes amino primaires, les groupes amino secondaires, les groupes carboxyle et les combinaisons de ceux-ci, ledit agent de traitement étant choisi parmi :
(i) les alkanolamines ;
(ii) les produits de réaction d'alkanolamines et d'esters glycidyliques d'acides carboxyliques ;
(iii) les polyoxyalkylènes comportant une fonction amine terminale ;
(iv) les résines de polyester aliphatique comportant une fonction carboxyle terminale ;
(v) les produits de réaction de polyamines aliphatiques et de composés époxy monofonctionnels ;
(vi) les produits de réaction d'alkanotamines et de résines de polyester aliphatique comportant une fonction carboxyle terminale ;
(vii) les mélanges de ceux-ci ;
ladite résine époxy et ledit agent de traitement étant choisis de manière à maintenir la viscosité dudit produit dans la gamme de 1 000 à 10 000 mPa·s (cP) à 40°C pendant au moins 20 minutes après le mélange et à donner un adhésif ou un revêtement flexible lorsque la réaction est complète.

2. Utilisation selon la revendication 1, dans laquelle la (les) résine(s) époxy et l'agent (les agents) de traitement sont présents dans des quantités telles que le rapport de l'équivalent époxy à l'équivalent hydrogène actif est dans la gamme de 5:1 à 1:4.

3. Utilisation selon la revendication 1 ou la revendication 2, dans laquelle la (les) résine(s) époxy et l'agent (les agents) de traitement sont présents dans des quantités telles que le rapport de l'équivalent époxy à l'équivalent hydrogène actif est dans la gamme de 2:1 à 1:2.

4. Laminé comprenant au moins un film polymère et un adhésif de laminage ou formulation de revêtement qui est essentiellement exempt(e) de solvant, d'eau et de composés isocyanate-fonctionnalisés, et qui comprend un produit obtenu en mélangeant et en faisant réagir :
(a) au moins une résine époxy choisie parmi les éthers diglycidyliques du bisphénol A, du bisphénol F ou du résorcinol, les éthers glycidyliques des polyols aliphatiques contenant de 2 à 8 groupes hydroxyle, et les mélanges de ceux-ci ; et
(b) au moins un agent de traitement ayant au moins un hydrogène actif contenu dans un groupe fonctionnel choisi parmi les groupes amino primaires, les groupes amino secondaires, les groupes carboxyle et les combinaisons de ceux-ci, ledit agent de traitement étant choisi parmi :
(i) les alkanolamines ;
(ii) les produits de réaction d'alkanolamines et d'esters glycidyliques d'acides carboxyliques ;
(iii) les polyoxyalkylènes comportant une fonction amine terminale ;
(iv) les résines de polyester aliphatique comportant une fonction carboxyle terminale;
(v) les produits de réaction de polyamines aliphatiques et de composés époxy monofonctionnels ;
(vi) les produits de réaction d'alkanolamines et de résines de polyester aliphatique comportant une fonction carboxyle terminale ;
(vii) les mélanges de ceux-ci ;
ladite résine époxy et ledit agent de traitement étant choisis de manière à maintenir la viscosité dudit produit dans la gamme de 1 000 à 10 000 mPa·s (cP) à 40°C pendant au moins 20 minutes après le mélange et à donner un adhésif ou un revêtement flexible lorsque la réaction est complète, sous forme traitée.

5. Laminé selon la revendication 4, comprenant au moins deux films polymères, dans lequel la formulation d'adhésif de laminage est disposée entre deux desdits films polymères et colle lesdits films polymères l'un à l'autre.

6. Laminé selon la revendication 4 ou la revendication 5, dans lequel au moins un film polymère comprend un thermoplastique choisi parmi le polyéthylène téréphtalate, le polyéthylène, le polypropylène et le polychlorure de vinylidène.

7. Laminé selon l'une quelconque des revendications 4 à 6, qui comprend en outre une feuille métallique et dans lequel la formulation d'adhésif de laminage est disposée entre ladite feuille métallique et au moins un film polymère.

8. Laminé selon l'une quelconque des revendications 4 à 7, dans lequel au moins un film polymère est métallisé.

9. Laminé sous forme de film flexible comprenant :
(a) une première couche composée d'une première polyoléfine ou d'un premier polyester ;
(b) une deuxième couche composée d'une seconde polyoléfine, qui peut être la même ou être différente de la première polyoléfine, d'un second polyester, qui peut être le même ou être différent du premier polyester, ou d'une feuille métallique ;
(c) une couche adhésive liant la première couche à la deuxième couche, ladite couche adhésive étant sensibiement exempte de solvant, d'eau et de composés isocyanate-fonctionnalisés, et qui comprend un produit obtenu en mélangeant et en faisant réagir :
(A) au moins une résine époxy choisie parmi les éthers diglycidyliques du bisphénol A, du bisphénol F ou du résorcinol, les éthers glycidyliques des polyols aliphatiques contenant de 2 à 8 groupes hydroxyle, et les mélanges de ceux-ci ; et
(B) au moins un agent de traitement ayant au moins un hydrogène actif contenu dans un groupe fonctionnel choisi parmi les groupes amino primaires, les groupes amino secondaires, les groupes carboxyle et les combinaisons de ceux-ci, ledit agent de traitement étant choisi parmi :
(i) les alkanolamines ;
(ii) les produits de réaction d'alkanolamines et d'esters glycidyliques d'acides carboxyliques ;
(iii) les polyoxyalkylènes comportant une fonction amine terminale ;
(iv) les diamines aromatiques ;
(v) les polyamines aromatiques ;
(vi) les résines de polyester aliphatique comportant une fonction carboxyle terminale ;
(vii) les polyamidoamines ;
(viii) les polyamides ;
(ix) les produits de réaction de polyamines aliphatiques et de composés époxy monofonctionnels ;
(x) les produits de réaction d'alkanolamines et de résines de polyester aliphatique comportant une fonction carboxyle terminale ; et
(vii) les mélanges de ceux-ci ;
ladite résine époxy et ledit agent de traitement étant choisis de manière à maintenir la viscosité dudit produit dans la gamme de 1 000 à 10 000 mPa·s (cP) à 40°C pendant au moins 20 minutes après le mélange et à donner un adhésif ou un revêtement flexible lorsque la réaction est complète.

10. Laminé sous forme de film flexible selon la revendication 9, dans lequel, dans la couche adhésive (c), la résine époxy (A) et l'agent de traitement (B) sont présents dans des quantités telles que le rapport de l'équivalent époxy à l'équivalent hydrogène actif est dans la gamme de 5:1 à 1:4.

11. Laminé sous forme de film flexible selon la revendication 9 ou la revendication 10, dans lequel, dans la couche adhésive (c), la résine époxy (A) et l'agent de traitement (B) sont présents dans des quantités telles que le rapport de l'équivalent époxy à l'équivalent hydrogène actif est dans la gamme de 2:1 à 1:2.

12. Laminé sous forme de film flexible selon l'une quelconque des revendications 9 à 11, dans lequel la première couche et la deuxième couche ont chacune une épaisseur dans la gamme de 10 à 100 micromètres.

13. Sachet flexible alimentaire fabriqué à partir d'un laminé sous forme de film flexible selon l'une quelconque des revendications 9 à 12.
